# EUROPÄISCHE PATENTANMELDUNG

(11) **EP 2 620 774 A2**
(43) Veröffentlichungstag der Anmeldung: **31.07.2013**
(21) Anmeldenummer: 12194547.1
(22) Anmeldetag: 28.11.2012
(51) Int. Cl.: G01N 35/00

(54) **Verfahren und eine Vorrichtung zum Handhaben von Probenbehältern**

(30) Priorität: 30.11.2011 DE 102011055899
(71) Anmelder: Andreas Hettich GmbH & Co. KG, 78532 Tuttlingen (DE)
(72) Erfinder: Clarke, Gavin, 78532 Tuttlingen (DE); Eberle, Klaus-Günter, 78532 Tuttlingen (DE)
(74) Vertreter: Kirschner, Klaus Dieter

(57) **Zusammenfassung**

Die Erfindung betrifft ein Verfahren zur automatischen Handhabung eines Probenbehälters (100), wobei wenigstens ein Probenbehälter (100), in einem Behälterträger (30) in eine Handhabungsvorrichtung (95) aufgenommen wird und ein Deckel (101) von einem Greifkopf (50) mit einer bestimmten Greifkraft gegriffen wird und der Deckel (101) durch eine kombinierte Bewegung aus translatorischer und rotatorischer Bewegung von dem Probenbehälter (100), entfernt wird. Die Erfindung zeichnet sich dadurch aus, dass durch eine optische Erfassung sowohl Deckel (101) als auch Probenbehälter (100), analysiert werden und einem Deckel- und Probenbehältertyp zugeordnet werden, und ferner jedem Deckel- und/oder Probenbehältertyp ein zur Entfernung des Deckels (101) notwendiges Drehmoment zugeordnet ist, und ausgehend von diesem Drehmoment die Greifkraft des Greifkopfes (50) eingestellt wird.

## Beschreibung

Die Erfindung betrifft ein Verfahren zum Handhaben von Probenbehältern gemäß dem Oberbegriff des Anspruchs 1 und eine Vorrichtung zum Handhaben von Probenbehältern gemäß der im Oberbegriff des Anspruchs 15 angegebenen Art.

Probenbehälter werden zum Aufbewahren von zu analysierenden Proben verwendet. Im Rahmen eines Vorbereitungsprozesses für die Analyse müssen die mit jeweiligen Proben gefüllten Probenbehälter in unterschiedlichster Weise von Handhabungs-Vorrichtungen gehandhabt werden.

Dabei müssen die Probenbehälter zu deren Handhabung üblicherweise in vorbestimmten eng begrenzten Stellungen positioniert sein. Es kommt allerdings immer wieder vor, dass Probenbehälter die engen Grenzen der vorbestimmten Stellungen nicht einhalten und dadurch nicht in gewünschter Weise gehandhabt werden können.

Dies beeinträchtigt in erheblichem Ausmaß die Funktionssicherheit der Handhabungs-Vorrichtungen, insbesondere von Entdeckelungsvorrichtungen.

Da Entdeckelungsvorrichtungen in vielen Fällen in übergeordnete Prozessabläufe eingebunden sind, kommt dieser eine zentrale Bedeutung zu, was einen hohen Anspruch an die Funktionssicherheit mit sich bringt.

Die EP 2 282 212 A1 offenbart eine Entdeckelungsvorrichtung. Gemäß dieser Druckschrift wird zur Entfernung eines Deckels ein Greifkopf an einem Deckel eines Probenbehälters angesetzt, wobei dieser durch eine kombinierte Bewegung aus translatorischer und rotatorischer Bewegung vom Probenbehälter entfernt wird. Durch diese Art der Entdeckelung können sowohl Schraub- als auch Steckverschlüsse mit einer Vorrichtung von einem Behälter entfernt werden.

Diese Vorrichtung hat jedoch den Nachteil, dass für die Anpassung an unterschiedliche Deckelarten Griffbereiche des Greifkopfs manuell angepasst werden müssen. Ferner kann einer Schrägstellung eines Probenbehälters nicht begegnet werden.

Der Erfindung liegt die Aufgabe zugrunde, ein Verfahren und eine Vorrichtung zum Handhaben von Probenbehältern bereitzustellen, welche eine verbesserte Funktionssicherheit aufweisen, und über eine größere Flexibilität bei der automatischen Handhabung von unterschiedlichen Probenbehälter und Deckeltypen verfügt.

Dies wird mit einem Verfahren gemäß Anspruch 1 erreicht. Die Unteransprüche bilden vorteilhafte Weiterbildungen der Erfindung.

In bekannter Weise wird zur automatischen Entdeckelung eines Probenbehälters wenigstens ein Probenbehälter in einem Behälterträger in eine Handhabungsvorrichtung aufgenommen. Ein Deckel eines Probenbehälters wird von einem Greifkopf mit einer bestimmten Greifkraft gegriffen. Der Deckel wird durch eine kombinierte Bewegung aus translatorischer und rotatorischer Bewegung von dem Probenbehälter entfernt.

Gemäß der Erfindung zeichnet sich das Verfahren dadurch aus, dass durch eine optische Erfassungseinrichtung sowohl Deckel als auch Probenbehälter analysiert werden und einem definierten Deckel- und Probenbehältertyp zugeordnet werden. Ferner ist jedem Deckel- und/oder Probenbehältertyp ein zur Entfernung des Deckels notwendiges Drehmoment zugeordnet. Ausgehend von diesem Drehmoment wird die Greifkraft des Greifkopfes eingestellt.

Durch die Anpassung der Greifkraft an unterschiedliche Deckel- und Probenbehältertypen kann ohne Veränderung der Griffbereichsgeometrie des Greifkopfes eine Vielzahl von unterschiedlichen Deckeltypen und Probenbehältertypen verarbeitet werden. Dadurch kann ohne manuellen Eingriff eine sichere automatische Verarbeitung erreicht werden.

Gemäß einem weiteren Aspekt der Erfindung erfolgt die Entfernung eines Deckels derart, dass ein Probenbehälter durch einen Hebegreifer in der Trägereinheit gegriffen wird und aus der Trägereinheit herausgehoben wird. Anschließend umgreift der Greifkopf den Deckel, worauf der Hebegreifer den Griff um den Probenbehälter löst. Anschließend führt der Greifkopf mit dem gehaltenen Probenbehälter eine Drehung von wenigstens 360 Grad aus. Nach der Drehung wird der Probenbehälter wieder durch den Hebegreifer gegriffen. Anschließend wird der Deckel durch eine kombinierte Bewegung aus translatorischer und rotatorischer Bewegung des Greifkopfes von dem Probenbehälter entfernt. Der Probenbehälter wird nach Entfernung des Deckels wieder in seine Ausgangsposition in die Trägereinheit zurückverbracht.

Durch die Rotation des Probenbehälters kann ein möglicherweise nicht absolut senkrecht liegender Probenbehälter in eine senkrechte Lage verbracht werden. Dadurch wird ein mögliches Verkanten bei der Entfernung des Deckels vermieden. Die Zuverlässigkeit und Fehlersicherheit wird dadurch erhöht.

Insbesondere wird die Greifkraft des Hebegreifers an das notwendige Drehmoment angepasst.

Vorzugsweise wird nach Greifen des Probenbehälters mit dem Hebegreifer und nach der Drehung des Probenbehälters der Deckelgreifer geöffnet. Nach einer erneuten Öffnung wird der Deckel mit einer Greifkraft gegriffen, die zur Aufbringung des notwendigen Drehmoments erforderlich ist, um den Deckel mit einer kombinierten Bewegung aus translatorischer und rotatorischer Bewegung von dem Probenbehälter zu entfernen.

In einer besonders vorteilhaften Weise korreliert die Greifkraft mit dem translatorischen Verfahrweg des Greifkopfes. Die Greifkraft mit welcher der Greifkopf den Deckel greift wird über die Positionierung des Greifkopfes in seiner vertikalen Lage eingestellt.

Insbesondere wird der Angriffspunkt des Greifkopfes am Deckel festgelegt, wobei eine entsprechende vertikale Position angefahren wird, die der aufzubringenden Greifkraft für das notwendige Drehmoment entspricht. Die Position des Deckels relativ zum Greifkopf wird durch den Hebegreifer angefahren und damit eingestellt.

Die vertikale Greiferposition bzw. die Höhe, in die der Probenbehälter verbracht wird, wird abhängig vom aufzuwendenden Drehmoment festgelegt.

Vorzugsweise kann während der Drehung des Probenbehälters zur vertikalen Ausrichtung auch ein auf dem Probenbehälter aufgebrachter Code, insbesondere ein Barcode, von der optischen Erfassungseinrichtung gelesen werden.

Insbesondere ist dafür die optische Erfassungseinrichtung derart ausgebildet, dass neben der Typisierung der Probenbehälter und Deckel auch ein Code auslesbar ist. Durch die Drehung des Behälters um wenigstens 360 Grad kann sichergestellt werden, dass ein auf dem Probenbehälter aufgebrachter Code in jedem Fall gelesen wird.

Zudem kann die Position des Codes, bzw. die Drehausrichtung des Probenbehälters gemerkt werden und der Code durch eine Probenbehälterdrehung über 360 Grad hinaus an eine definierte Position gedreht werden. Eine definierte Position kann beispielsweise durch die Lage eines Sichtfensters in einer Trägereinheit gegeben sein.

Auf diese Weise können Synergien zwischen Entdeckelung und Prozesssteuerung genutzt werden, wobei zwei Aufgaben in einem Arbeitsschritt abgearbeitet werden können.

In einer weiteren Fortbildung der Erfindung ist vorgesehen, dass die Lage eines Probenbehälters in einer Trägereinheit mit einem optischen System kontrolliert wird. Dabei wird insbesondere eine Verkippung, also eine von einer senkrechten Lage des Probenbehälters abweichende Positionierung bewertet.

Die Lage eines Probenbehälters kann vor der Entdeckelung kontrolliert werden, worauf bei einer Schrägstellung eine von der normalen Behandlung abweichende Behandlung des Probenbehälters ausgelöst werden kann.

Ferner kann die Lage des Probenbehälters nach der Entdeckelung kontrolliert werden. Dies hat den Vorteil, dass ein von der Schrägstellung des Probenbehälters abhängiger Folgeprozess initiiert werden kann. Beispielsweise kann ein außerhalb der Toleranzen schräg stehender Behälter aussortiert werden.

Gemäß einer weiter vorteilhaften Ausgestaltung der Erfindung kann die Deckelfarbe mit einer optischen Erfassungseinrichtung ermittelt werden, wobei eine Deckelfarbe eines Deckeltyps mit einer Behandlungsvorschrift verknüpft ist. So kann beispielsweise ein Deckel mit einer bestimmten Farbe, der aus Sicherheitsgründen oder aufgrund von erhöhter Kontaminationsgefahr für die Proben auf keinen Fall geöffnet werden darf, die Handhabungsvorrichtung ungeöffnet wieder verlassen.

Zur Durchführung des Verfahrens ist eine erfindungsgemäße Vorrichtung zur Handhabung von Probenbehältern, insbesondere röhrchenförmigen Probenbehältern vorgesehen.

Vorrichtung zur automatischen Handhabung eines Probenbehälters mit einem Greifkopf, der mit einer Steuereinheit verbunden ist, wobei der Greifkopf wenigstens zwei zangenartige Greifbacken aufweist. Der Greifkopf ist in seiner vertikalen Position durch einen Motor in einer kombinierten Bewegung aus einer translatorischen vertikalen und einer rotatorischen Bewegung verfahrbar, wobei der Öffnungswinkel der Greifkopfbacken abhängig von der vertikalen Verfahrstrecke des Greifkopfes ist.

Erfindungsgemäß weist die Handhabungsvorrichtung eine optische Erfassungseinrichtung auf, die mit der Steuereinheit verbunden ist. Durch diese optische Erfassungseinrichtung ist eine Typisierung sowohl des Probenbehälters als auch des Deckels möglich. Durch die Auswertung der Typisierung können Größe des Probenbehälters und Verschlussart des Deckels als auch ein notwendiges Mindestdrehmoment, welches zur Deckelöffnung benötigt wird ausgelesen werden.

Die Greifkraft, mit der der Greifkopf einen Deckel umgreifen kann, wird insbesondere durch Federn bereitgestellt, welche die Greifbacken verbinden. Dadurch ist die Spannkraft der Spannbacken abhängig vom Öffnungswinkel der Greifkopfbacken.

Insbesondere ist der Griffbereich der Greifbacken derart ausgestaltet, dass dieser eine Verzahnung aufweist, die vorzugsweise in Drehrichtung gerichtet ist. Ferner ist eine Feder im Griffberiech vorgesehen, welche im entlasteten Zustand über die Verzahnung hinausragt, jedoch bei Belastung bei Greifen des Deckels weggedrückt wird.

Durch die Feder kann ein Deckel nach dem Entdeckelungsvorgang leicht wieder von den Greifbacken gelöst werden.

Die Greifbacken können ferner in ihrem Greifbereich Lappen aufweisen, die sich während des Entdeckelungsvorgangs über den Probenbehälter legen. Dadurch wird ein Austreten des Inhalts der Probenbehälter während des Entdeckelungsvorgangs verhindert. Demgemäß kann dadurch eine Kontamination nebenliegender offener Probenbehälter vermieden werden.

In einer weiteren vorteilhaften Ausgestaltung ist die optische Erfassungseinrichtung mit einer Farberkennung versehen, so dass sie unterschiedliche Deckelfarben unterscheiden kann. Abhängig von der ermittelten Deckelfarbe können Folgeprozesse hinterlegt sein, bei welchen beispielsweise ein Deckel aus Sicherheitsgründen oder aufgrund von erhöhter Kontaminationsgefahr für die Proben auf keinen Fall geöffnet werden darf, die Handhabungsvorrichtung ungeöffnet wieder verlassen.

Gemäß einer Ausführungsform der Erfindung kann die optische Erfassungseinrichtung derart eingerichtet sein, dass die jeweilige Drehausrichtungen der Probenbehälter in dem Probenbehälterträger erkennen kann. Ferner ist die optische Erfassungseinrichtung eingerichtet, einen an den Umfangswänden der jeweiligen Probenbehälter vorgesehenen Codes auszulesen, sowie die erkannten Drehausrichtungen und ausgelesenen Codes an die Steuereinheit zu übermitteln.

Auf diese Weise können, neben dem Aufbringen und/oder Entfernen der Deckel, gleichzeitig zusätzliche Informationen über den Probenbehälter und/oder die darin enthaltene Probe in das System eingelesen werden.

Gemäß einer weiteren Ausführungsform der Erfindung ist die optische Erfassungseinrichtung eingerichtet, einen Entdeckelt-Zustand und einen Bedeckelt-Zustand der jeweiligen Probenbehälter zu erfassen und diese an die Steuereinheit zu übermitteln.

Damit kann einerseits festgestellt werden, ob die beabsichtigte Entdecklungs- oder Bedecklungsoperation erfolgreich war oder nicht, und andererseits eine Fehlfunktion der Vorrichtung (z.B. durch versuchtes Entdeckeln eines deckellosen Probenbehälters) vermieden werden.

Demnach ist gemäß einer Ausführungsform der Erfindung der Greifkopf von der Steuereinheit ansteuerbar, wenn die jeweiligen Probenbehälter entdeckelt werden sollen, auf Basis eines vor einer Entdecklungsoperation der Handhabungseinrichtung erkannten Entdeckelt-Zustandes eines der Probenbehälter für diesen Probenbehälter das Entdeckeln auszulassen.

Gemäß einem weiteren Aspekt der Erfindung kann eine Vorrichtung zur automatischen Handhabung eines Probenbehälters einen Greifkopf umfassen, der mit einer Steuereinheit verbunden ist, wobei der Greifkopf wenigstens zwei zangenartige Greifkopfbacken aufweist. Der Greifkopf ist in seiner vertikalen Position durch einen Motor in einer kombinierten Bewegung aus einer translatorischen, vertikalen und einer rotatorischen Bewegung verfahrbar, wobei der Öffnungswinkel der Greifkopfbacken abhängig von der vertikalen Verfahrstrecke des Greifkopfes sein kann. Neben dem Greifkopf kann ein Hebegreifer vorgesehen sein, der mit der Steuereinheit verbunden ist, wobei der Hebegreifer einen Griffberiech zur Festlegung des Probenbehälter aufweist, und der Hebegreifer derart mit einem Motor verbunden ist, dass er einen Probenbehälter anheben, festhalten und absetzen kann.

Der Hebegreifer umfasst insbesondere zwei Schenkel an deren Ende je ein Griffbereich angeordnet ist. Der Antrieb der Schenkel des Hebegreifers erfolgt durch eine Drehscheibe, die eine exzentrische Führungsbahn aufweist, in der die freien vom Griffbereich entfernten Enden geführt sind. Eine Drehung der Drehscheibe hat eine Abstandsänderung der beiden freien vom Griffbereich entfernten Enden zur Folge. Dies wiederum führt aufgrund der Lagerung im mittelbereich der Schenkel zu einer Greifbewegung am Griffbereichsende.

Der Griffbereich des Hebegreifers ist derart gestaltet, dass er unterschiedlich Probendurchmesser insbesondere kreisförmigen Querschnitts aufnehmen kann. Dies wird insbesondere durch zwei federnde, überkreuzende Backen gelöst. Der Griffbereich ist zudem durch Anformungen am Greifende der Schenkel des Hebegreifers gebildet und kann eine Anlagefläche mit einer elliptische Grundform aufweisen.

Erfindungsgemäß können daher röhrchenförmige Probenbehälter mit einem Durchmesser von 11 bis 16,5 mm verarbeitet werden.

Vorzugsweise kann ein vertikales Verfahren des Greifkopfs durch eine Drehbewegung des Greifkopfs gegenüber einem mit einem Gewinde versehenen Schaft erfolgen. Dadurch kann eine translatorische und rotatorische Bewegung mit nur einem Motor erzeugt werden.

Der Schaft wird bis in eine Endlage, an der ein Anschlag vorgesehen ist gedreht. Am Anschlagpunkt weisen die Greifbacken einen maximalen Öffnungswinkel zum Greifen eines Deckels auf.

Dreht der Motor weiter über diesen Bereich hinaus, wird ein Deckel in jedem Fall freigegeben. Vorzugsweise ist dies bei einer Drehung von 120 Grad über den Anschlag hinaus der Fall.

Gemäß noch einer weiteren Ausführungsform der Erfindung ist der Greifkopf von der Steuereinheit ansteuerbar, auf Basis der erkannten Drehausrichtungen der Probenbehälter, diese so in dem Probenbehälterträger drehauszurichten, dass die jeweiligen Codes der Probenbehälter durch jeweilige seitlich in dem Probenbehälterträger vorgesehene Inspektionsaussparungen hindurch sichtbar sind. Damit wird vorteilhaft sichergestellt, dass die Codes der jeweiligen Probenbehälter, ohne die Probenbehälter aus dem Probenbehälterträger nehmen zu müssen, in Nachfolgeoperationen zuverlässig ausgelesen werden können.

Somit können mit der erfindungsgemäßen Vorrichtung variabel Probenbehälter und Deckel unterschiedlichster Typen gehandhabt werden.

Gemäß einer weiteren Ausführungsform der Erfindung weist die optische Erfassungseinrichtung eine Kamera auf, die an der Aufnahmestation angeordnet ist.

Ferner kann eine zweite optische Erfassungseinrichtung zur Lagebestimmung eines Probenbehälters vorgesehen sein. Diese ist gegenüber einer spiegelnden Fläche angeordnet. Die Spiegelnde Fläche und die zweite optische Erfassungseinrichtung liegen, während der Lagebestimmung, in einer Ebene mit einer vertikalen Soll-Lage des in den Behälterträger eingesetzten Probenbehälters.

Gemäß einem weiteren Aspekt der Erfindung weist der Greifkopf eine flexible Lagerung auf.

Durch die flexible Lagerung des Greifkopfs und die damit erzielte Ausgleichmöglichkeit von Schrägstellungen der Probenbehälter, werden die Grenzen für die zum sicheren Handhaben dieser vorgegebenen vorbestimmte Stellung (hier die Vertikalstellung) der Probenbehälter erweitert. Damit können im Betrieb der Vorrichtung diese Grenzen in der Regel eingehalten werden, so dass die Probenbehälter in gewünschter Weise gehandhabt werden können und es zu keiner Fehlfunktion kommt. Damit weist die erfindungsgemäße Vorrichtung eine verbesserte Funktionssicherheit auf.

Gemäß noch einer weiteren Ausführungsform der Erfindung weist die Vorrichtung außerdem eine Entladestation auf zum Entladen des die Probenbehälter tragenden Probenbehälterträgers, wobei die optische Erfassungseinrichtung eine Kamera aufweist, die an der Entladestation angeordnet ist.

Gemäß noch einer Ausführungsform der Erfindung ist die an der Entladestation angeordnete Kamera eingerichtet, für jeden der in dem Probenbehälterträger aufgenommenen Probenbehälter einen Fehlerzustand zu bestimmen und diesen an die Steuereinheit zu übermitteln.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Weitere Vorteile, Merkmale und Anwendungsmöglichkeiten der vorliegenden Erfindung ergeben sich aus der nachfolgenden Beschreibung in Verbindung mit dem bzw. den in der Zeichnung dargestellten Ausführungsbeispiel(en).

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung zeigt:
- Fig. 1: einen Ausschnitt einer erfindungsgemäßen Handhabungsvorrichtung 95 mit zwei Bearbeitungsstationen;
- Fig. 2: die wesentlichen Komponenten einer erfindungsgemäßen Handhabungsvorrichtung;
- Fig. 3: ausschnittsweise den Griffbereich eines Greifkopfschenkels;
- Fig. 4: zeigt ausschnittsweise den Endbereich eines Schenkels eines Hebegreifers;
- Fig. 5: zeigt den Hebegreifer mit seinem Greifmotor;
- Fig. 6: zeigt eine schematische Seitenansicht der Handhabungsvorrichtung, und
- Fig. 7: eine Draufsicht eines Probenbearbeitungssystems gemäß einer Ausführungsform der Erfindung.

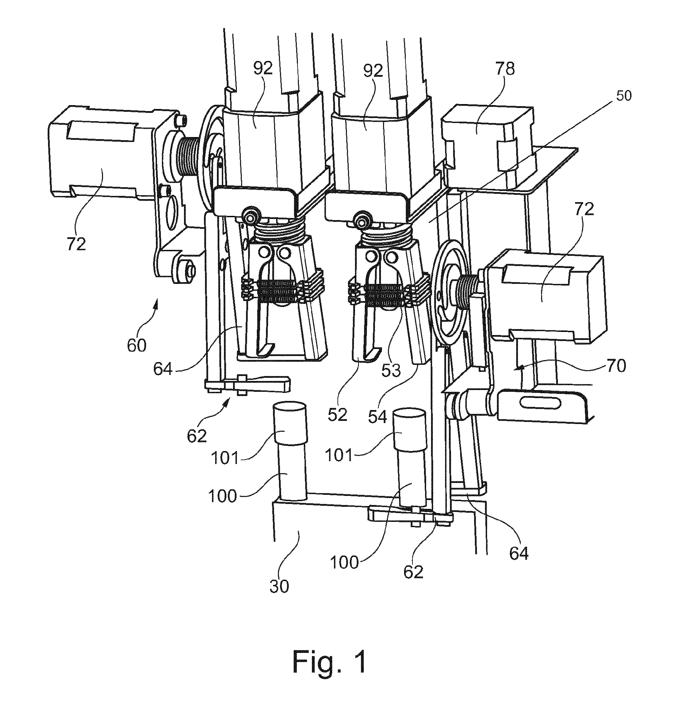

Im Folgenden wird unter Bezugnahme auf die Figuren 1 bis 7 eine Vorrichtung zum Handhaben von Probenbehältern in einer Ausführungsform der Erfindung beschrieben.

Fig. 1 zeigt einen Ausschnitt einer erfindungsgemäßen Handhabungsvorrichtung 95 mit zwei Bearbeitungsstationen. Eine Bearbeitungsstation umfasst einen Hebegreifer 70 der über einen Motor 72 seine Greiffunktion ausführen kann, wobei die Schenkel 62, 64 um einen Probenbehälter 100 gelegt werden. Anschließend kann der gegriffenen Probenbehälter 100 mit Hilfe des Motors 72 vertikal verfahren werden. Auf diese Weise kann der Probenbehälter 100 aus einer Trägereinheit 40 entnommen werden und so dem Greifkopf 50 zugeführt werden. Der Greifkopf 50 bring auf den Deckel 42 des Probenbehälters eine Greifkraft auf, die sich aus der Einstellung der die Greifbacken 52, 54 verbindenden Federn ergibt.

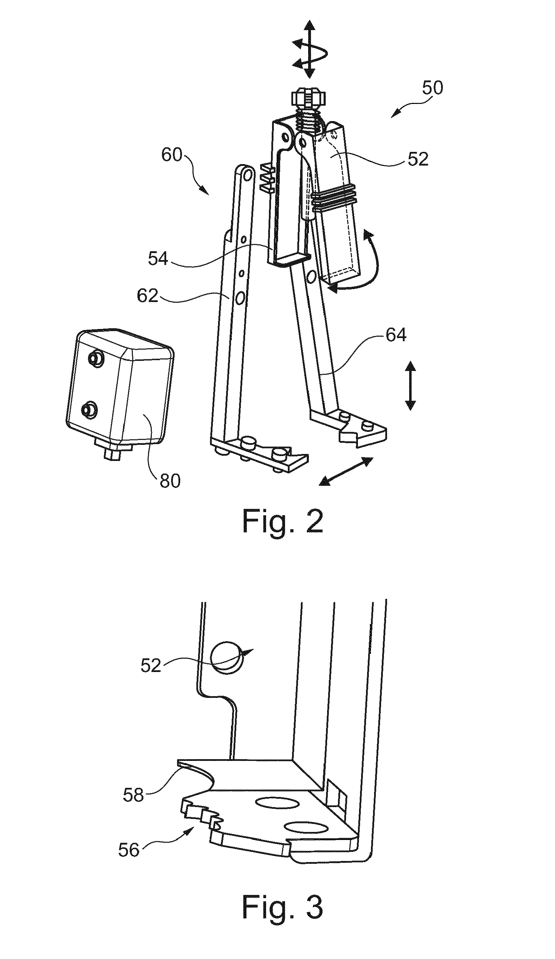

Fig. 2 zeigt die wesentlichen Komponenten einer erfindungsgemäßen Handhabungsvorrichtung in perspektivischer Darstellung. Die Handhabungsvorrichtung umfasst einen Greifkopf 50, einen Hebegreifer 60 sowie eine Kamera 80. Die die Greifeinrichtungen 50, 60 antreibenden Antriebseinrichtungen sind aus Gründen der Übersichtlichkeit in dieser Figur nicht dargestellt. Die Kamera 80 ist derart angeordnet, dass sie einen zugeführten Probenbehälter erfassen kann. Die Kamera 80 ist als intelligente Kamera ausgebildet und kann anhand der Aufnahme des Probenbehälters den Probenbehältertyp als auch den Deckeltyp ermitteln. Die Kamera bewertet dafür Form und Oberfläche des Probenbehälters und des Deckels.

Entsprechend dem Ergebnis der Bewertung wird der von der Hebegreifer 60 gegriffene Probebehälter in seiner Höhe verfahren. Die Information über den Deckeltyp wird insofern verarbeitet, dass über die Steuereinrichtung (nicht gezeigt) dem Greifkopf 50 eine Position mitgeteilt wird die er anfahren muss, um einen ausreichenden Öffnungswinkel der Greifbacken 52, 54 zu gewährleisten, damit der Probenbehälter zwischen diese eingeführt werden kann. Ist der Probenbehälter entsprechend positioniert, können durch die Drehbewegungen des den Greifkopf 50 antreibenden Motors (nicht gezeigt) die Backen 52, 54 mit der durch die Federn 53 aufgebrachte Federkraft geschlossen werden.

Wird der Probenbehälter vom Greifkopf 50 gegriffen, werden die Schenkel 62, 64 nach außen geschwenkt und lösen sich somit vom gehaltenen Probenbehälter. Der Probenbehälter ist nunmehr frei im Greifkopf 50 gehalten. Der Probenbehälter kann nun durch den Greifkopf 50 gedreht werden. Während dieser Drehung um wenigstens 360° kann von der Kamera 80 ein auf den Probenbehälter aufgebrachter Code, insbesondere ein Barcode, gelesen werden. Zudem erfolgt durch die Drehung eine Ausrichtung des Probenbehälters axial zur Drehachse des Greifkopfes 50' was gewährleistet, dass der Probenbehälter nach der Drehung vertikal ausgerichtet ist. Die freie Drehung des Probenbehälters ist beendet, wenn eine vorgesehene Position für den Code bzw. eine entsprechende Drehausrichtung des Probenbehälters erreicht ist.

Ist die Position erreicht, wird der Behälter wieder von dem Greifarmen 62, 64 des Hebegreifers 60 gefasst. Nachdem der Hebegreifer 60 den Probenbehälter festhält, kann ein Deckel des Probenbehälters, der durch den Greifkopf 50 gehalten ist, durch eine Bewegung des Greifkopfes 50, die sich aus einer translatorischen und einer rotatorischen Bewegung zusammensetzt entfernt werden.

Nachdem der Deckel entfernt wurde, wird nun der entdeckelte Probenbehälter durch eine rein translatorische Bewegung des Hebegreifers 60 wieder im Behälterträger abgestellt und der Griff durch Verschwenken der Hebegreiferarme 62, 64 gelöst. Der Deckel wird durch ein erneutes Öffnen des Greifkopfes 50 losgelassen und entsorgt.

Fig. 3 zeigt ausschnittsweise den Griffbereich einer Greifbacke 52. Der Griffbereich weist eine Verzahnung 56 auf, die in Drehrichtung gerichtet ist. Ferner ist eine Feder 58 vorgesehen, welche im entlasteten Zustand über die Verzahnung hinausragt. Diese Feder 58 wird sobald der Greifkopf den Deckel umfasst aus dem Griffbereich herausgedrückt. Sie dient dazu, dass nachdem der Deckel von dem Probenbehälter gelöst ist, dass dieser nach dem Öffnen nicht an der Verzahnung festsitzt sondern von der Feder vom Griffende abgedrückt wird. Sie sorgt für ein zuverlässiges Lösen eines Deckels vom Greifkopf 50.

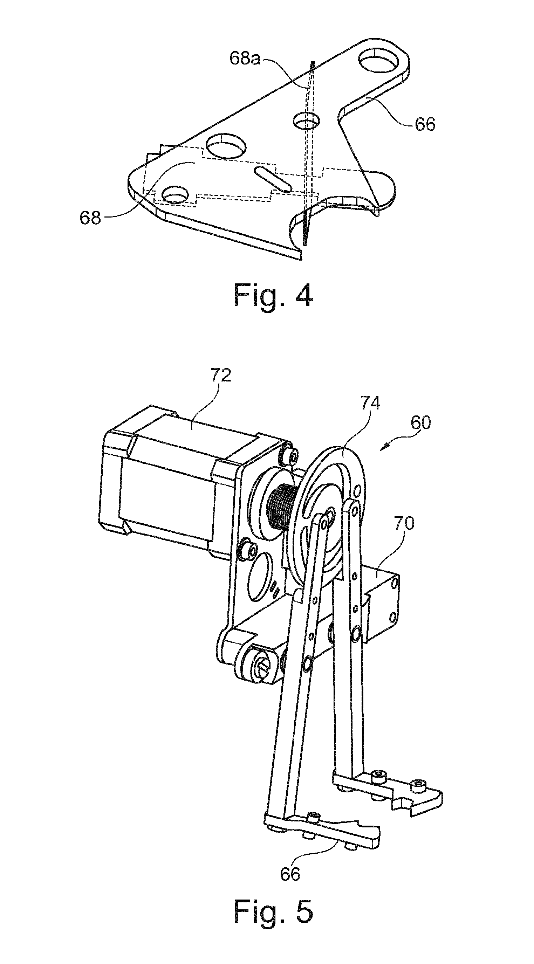

Fig. 4 zeigt ausschnittsweise den Endbereich eines Schenkels 62 des Hebegreifers 60. Gezeigt ist eine untere Platte 66 die am unteren Schenkel 62 befestigt ist. Die das obere Ende abschließende obere Platte ist aus Gründen der Übersichtlichkeit nicht dargestellt. Der Griffbereich des Hebegreifers 60 ist entsprechende so gestaltet, dass zwei sich überkreuzende Federelemente 68, 68a einen Griffbereich bilden. Dadurch ist gewährleistet, dass durchmesserunabhängig immer eine ausreichend große Kraft auf den Probenbehälter übertragen werden kann. Die Federelemente 68 und 68a sind dafür an einem Ende drehfest mit der oberen und unteren Platte des Griffbereichs verbunden. Lediglich ein maximaler greifbarer Probenbehälterdurchmesser ist durch die Geometrie der Platte 66 vorgegeben.

Fig. 5 zeigt den Hebegreifer 60 mit seinem Motor für die Greiffunktion. Die Verfahreinrichtung für eine vertikale Bewegung des Hebegreifers ist aus Gründen der Übersicht in dieser Darstellung nicht gezeigt. Der Hebegreifer 60 umfasst die Hebegreiferarme 62 und 64 die im Griffbereich des Hebegreifers 60 auslaufen. Die Schenkel 62, 64 des Hebegreifers sind an einer Schenkelaufnahme 70 drehbar gelagert. Am vom Greifbereich abgewandten Ende weisen die Schenkel 62, 64 Verbindungsmittel auf, welche in der von dem Motor 72 angetriebenen Drehscheibe 74 geführt sind. Die Führung ist als exzentrische Führungsbahn ausgeführt. Dadurch wird eine Drehbewegung des Rotors in eine Lateralbewegung der beiden freien Enden zueinander umgesetzt. Dadurch wird der Greifer an den Probenbehälter gefahren bzw. entfernt. Die gesamte dargestellte Konstruktion ist durch die nicht gezeigte Verfahreinrichtung in vertikaler Richtung verfahrbar und kann daher einen Probenbehälter aus einer Trägereinheit entnehmen und in diese zurücksetzen. Des Weiteren kann darüber die Position des Probenbehälters während der Entdeckelung festgelegt werden.

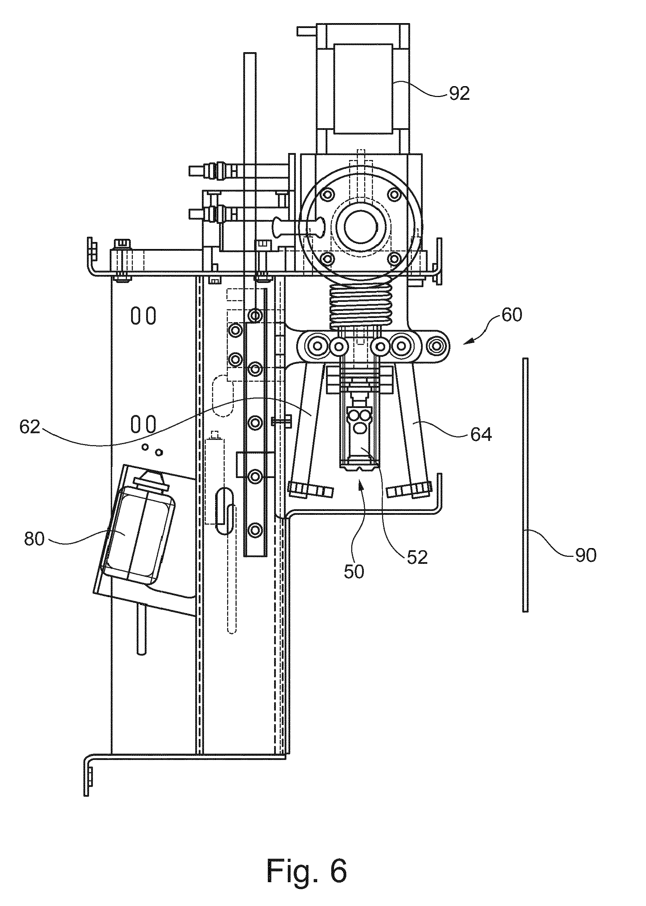

Fig. 6 zeigt eine schematische Seitenansicht der Handhabungsvorrichtung mit dem Hebegreifer 60, dem Greifkopf 50 und der Kamera 80. Ferner ist auch der den Greifkopf 50 antreibende Schrittmotor 92 dargestellt. Die Kamera 80 ist derart auswertbar, dass sie mit einem, ihr gegenüberliegenden Spiegel ein optisches System bildet. Durch dieses optische System kann die Schrägstellung eines Probenbehälters detektiert werden.

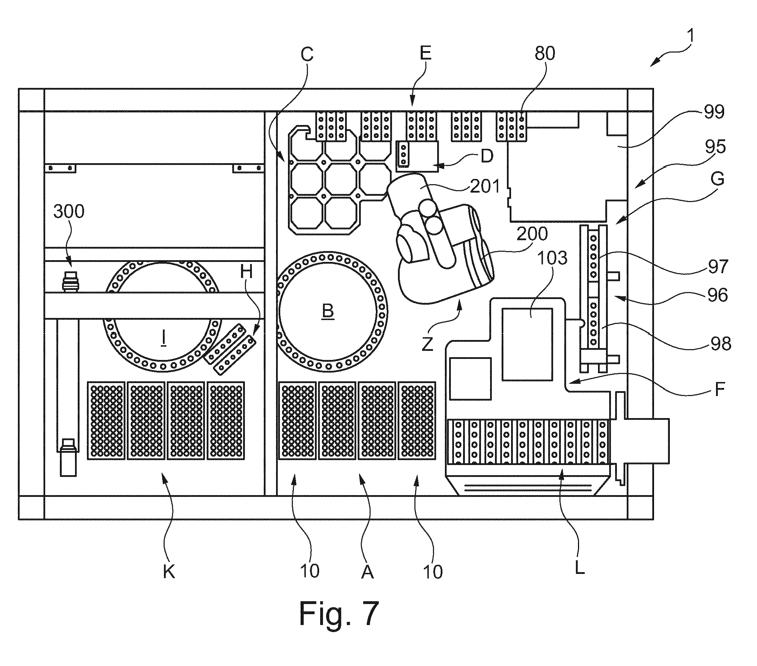

Fig.7 zeigt ein Probenbearbeitungssystem 1. Dieses weist einen Eingangsspeicherbereich A, einen ersten Zwischenspeicherbereich B, einen zweiten Zwischenspeicherbereich C, einen dritten Zwischenspeicherbereich D, einen vierten Zwischenspeicherbereich E, einen Zentrifugierbereich F, einen Entdecklungsbereich G, einen fünften Zwischenspeicherbereich H, einen sechsten Zwischenspeicherbereich I und einen Ausgangsspeicherbereich K auf.

In etwa mittig zwischen dem Eingangsspeicherbereich A, dem ersten Zwischenspeicherbereich B, dem zweiten Zwischenspeicherbereich C, dem dritten Zwischenspeicherbereich D, dem vierten Zwischenspeicherbereich E, dem Zentrifugierbereich F und dem Entdecklungsbereich G ist in einem Zentralbereich Z ein mit einem gelenkigen Roboterarm operierender erster Roboter 200 angeordnet.

Über dem fünften Zwischenspeicherbereich H, dem sechsten Zwischenspeicherbereich I und dem Ausgangsspeicherbereich K ist ein ähnlich einem Portalkran operierender Roboter 300 angeordnet.

In dem Eingangsspeicherbereich A sind eine Mehrzahl von jeweils aus mehreren Aufnahmemodulen 11 zum Aufnehmen von Probenbehältern 100 vorbestimmter Außenabmessungen zusammengesetzten Aufnahmemodulanordnungen 10 angeordnet und mit Probenbehältern 100 befüllt.

Die Probenbehälter 100 sind bevorzugt jeweils röhrchenförmig in der Art eines Reagenzglases ausgebildet.

Die Handhabungseinrichtung ist ebenfalls in dem Gehäuse 99 angeordnet und weist wenigstens einem Greifkopf auf, welcher im Rahmen von Verfahrfunktionen, Drehfunktionen und Greiffunktionen dessen von einer damit verbundenen Steuervorrichtung (nicht gezeigt) ansteuerbar ist, um auf die jeweiligen offenen Enden der Probenbehälter 100 jeweilige Deckel 101 aufzubringen und/oder davon zu entfernen.

Gemäß der Erfindung ist der Greifkopf dabei so flexibel gelagert, dass er eine von einer vertikalen Ausrichtung abweichende jeweilige Schrägstellung der in dem Probenbehälterträger 30 aufgenommenen Probenbehälter 100 ausgleichen kann.

Die Vorrichtung 95 weist außerdem eine optische Erfassungseinrichtung (nicht gezeigt) auf, die mit der Steuervorrichtung verbunden ist und die eingerichtet ist, jeweilige Drehausrichtungen der Probenbehälter 100 in dem Probenbehälterträger 30 zu erkennen und die auf den jeweiligen Umfangswänden der Probenbehälter 100 vorgesehene Codes (hier z.B. Barcodes) auszulesen und die erkannten Drehausrichtungen und ausgelesenen Codes an die Steuervorrichtung zu übermitteln.

Die optische Erfassungseinrichtung ist außerdem eingerichtet, einen Entdeckelt-Zustand und einen Bedeckelt-Zustand der jeweiligen Probenbehälter 100 zu erfassen und diese an die Steuervorrichtung zu übermitteln.

Die optische Erfassungseinrichtung ist ferner eingerichtet, einen Probenbehältertyp und einen Deckeltyp zu erkennen und diese an die Steuervorrichtung zu übermitteln.

Der Greifkopf ist von der Steuervorrichtung ansteuerbar, auf Basis der erkannten Drehausrichtungen der Probenbehälter 100 diese so in dem Probenbehälterträger 30 drehauszurichten, dass die jeweiligen Codes der Probenbehälter 100 durch die jeweiligen seitlich in dem Probenbehälterträger 30 vorgesehenen Inspektionsaussparungen 83 hindurch sichtbar sind.

Der Greifkopf ist von der Steuervorrichtung außerdem ansteuerbar, wenn die jeweiligen Probenbehälter entdeckelt werden sollen, auf Basis eines vor einer Entdecklungsoperation der Handhabungseinrichtung erkannten Entdeckelt-Zustandes eines der Probenbehälter 100 für diesen Probenbehälter 100 das Entdeckein auszulassen.

Der Greifkopf ist von der Steuervorrichtung ferner ansteuerbar, auf Basis des erkannten Probenbehältertyps und Deckeltyps die jeweiligen Deckel bedarfsweise über eine schraubende Drehbewegung aufzuschrauben und abzuschrauben oder über eine lineare Bewegung aufzustecken und abzuziehen.

Die optische Erfassungseinrichtung weist eine Kamera, die an der Aufnahmestation angeordnet ist, und eine Kamera auf, die an der Entladestation angeordnet ist.

Die an der Entladestation angeordnete Kamera ist eingerichtet, für jeden der in dem Probenbehälterträger 30 aufgenommenen Probenbehälter 100 einen Fehlerzustand zu bestimmen und diesen an die Steuervorrichtung zu übermitteln.

### Bezugszeichenliste

- 1: Probenbearbeitungssystem
- 10: Aufnahmemodulanordnung
- 30: Probenbehälterträger
- 40: Trägereinheit
- 50: Greifkopf
- 52: Greifbacke
- 54: Greifbacke
- 56: Verzahnung
- 58: Feder
- 60: Hebegreifer
- 62: Schenkel
- 64: Schenkel
- 66: Platte
- 68: Federelement
- 68a: Federelement
- 70: Armaufnahme
- 72: Motor
- 74: Drehscheibe
- 80: Kamera
- 90: Spiegel
- 92: Schrittmotor
- 95: Handhabungsvorrichtung
- 96: Förderer
- 97: Ladestation
- 98: Entladestation
- 99: Gehäuse
- 100: Probenbehälter
- 101: Deckel
- 200: Roboter
- 300: Roboter

- A: Eingangsspeicherbereich
- B: erster Zwischenspeicherbereich
- C: zweiter Zwischenspeicherbereich
- D: dritter Zwischenspeicherbereich
- E: vierter Zwischenspeicherbereich
- F: Zentrifugierbereich
- G: Entdecklungsbereich
- H: fünfter Zwischenspeicherbereich
- I: sechster Zwischenspeicherbereich
- L: siebter Zwischenspeicherbereich
- K: Ausgangsspeicherbereich
- Z: Zentral bereich

## Patentansprüche

1. Verfahren zur automatischen Handhabung eines Probenbehälters (100), wobei wenigstens ein Probenbehälter (100), in einem Behälterträger (30) in eine Handhabungsvorrichtung (95) aufgenommen wird und ein Deckel (101) von einem Greifkopf (50) mit einer bestimmten Greifkraft gegriffen wird und der Deckel (101) durch eine kombinierte Bewegung aus translatorischer und rotatorischer Bewegung von dem Probenbehälter (100), entfernt wird, **dadurch gekennzeichnet, dass** durch eine optische Erfassung sowohl Deckel (101) als auch Probenbehälter (100), analysiert werden und einem Deckel- und Probenbehältertyp zugeordnet werden, und ferner jedem Deckel- und/oder Probenbehältertyp ein zur Entfernung des Deckels (101) notwendiges Drehmoment zugeordnet ist, und ausgehend von diesem Drehmoment die Greifkraft des Greifkopfes (50) eingestellt wird.

2. Verfahren nach Anspruch 1, **dadurch gekennzeichnet, dass** ein Probenbehälter (100), durch einen Hebegreifer (60) in der Trägereinheit (30) gegriffen wird und aus dieser herausgehoben wird und anschließend der Greifkopf (50) den Deckel (101) umgreift, wonach der Hebegreifer (60) den Griff um den Probenbehälter (100), löst und anschließend der Greifkopf (50) mit dem gehaltenen Probenbehälter (100), eine Drehung von wenigstens 360 Grad ausführt, wobei nach der Drehung der Probenbehälter (100) wieder durch den Hebegreifer (60) gegriffen wird und anschließend der Deckel (101) durch eine kombinierte Bewegung aus translatorischer und rotatorischer Bewegung von dem Probenbehälter (100), entfernt wird, und dass der Probenbehälter (100) nach Entfernung des Deckels (101) wieder in seine Ausgangsposition zurückverbracht wird.

3. Verfahren zur automatischen Handhabung eines Probenbehälters (100), nach dem Oberbegriff des Anspruchs 1, **dadurch gekennzeichnet, dass** ein Probenbehälter (100), durch einen Hebegreifer (60) in der Trägereinheit (30) gegriffen wird und aus dieser herausgehoben wird und anschließend der Greifkopf (50) den Deckel (101) umgreift, wonach der Hebegreifer (60) den Griff um den Probenbehälter (100), löst und anschließend der Greifkopf (50) mit dem gehaltenen Probenbehälter (100), eine Drehung von wenigstens 360 Grad ausführt, wobei nach der Drehung der Probenbehälter (100), wieder durch den Hebegreifer (60) gegriffen wird und anschließend der Deckel (101) durch eine kombinierte Bewegung aus translatorischer und rotatorischer Bewegung von dem Probenbehälter (100), entfernt wird und dass der Probenbehälter (100), nach Entfernung des Deckels (101) wieder in seine Ausgangsposition zurückverbracht wird.

4. Verfahren nach Anspruch 3, **dadurch gekennzeichnet, dass** durch eine optische Erfassung sowohl Deckel (101) als auch Probenbehälter (100), analysiert werden und einem Deckel- und Probenbehältertyp zugeordnet werden, und ferner jedem Deckel- und/oder Probenbehältertyp ein zur Entfernung des Deckels (101) notwendiges Drehmoment zugeordnet ist, und ausgehend von diesem Drehmoment die Greifkraft des Greifkopfes (50) eingestellt wird.

5. Verfahren nach einem der vorangehenden Ansprüche 2 bis 4, **dadurch gekennzeichnet, dass** nach Greifen des Probenbehälters (100), mit dem Hebegreifer (60) und nach der Drehung des Probenbehälters (100), der Greifkopf (50) geöffnet wird und dann wieder den Deckel (101) mit einer Greifkraft greift, und der Deckel (101) durch eine kombinierte Bewegung aus translatorischer und rotatorischer Bewegung von dem Probenbehälter (100), entfernt wird.

6. Verfahren nach einem der vorangehenden Ansprüche, **dadurch gekennzeichnet, dass** eine optische Erfassungseinrichtung (80) bestimmt, ob ein Probenbehälter (100), bereits entdeckelt ist, woraufhin eine Entdeckelung für den bereits entdeckelten Probenbehälter (100), nicht durchgeführt wird.

7. Verfahren nach einem der vorangehenden Ansprüche, **dadurch gekennzeichnet, dass** die Greifkraft mit dem translatorischen Verfahrweg des Greifkopfes (50) korreliert und dass für die Positionierung des Angriffspunktes des Greifkopfes (50) am Deckel (101) eine vertikale Position angefahren wird, die der aufzubringenden Haltekraft für das Drehmoment entspricht.

8. Verfahren zur automatischen Handhabung eines Probenbehälters (100), nach Anspruch 1, **dadurch gekennzeichnet, dass** die Höhe in die der Probenbehälter (100), verbracht wird abhängig vom aufzuwendenden Drehmoment festgelegt wird.

9. Verfahren nach einem der vorangehenden Ansprüche 2 bis 7, **dadurch gekennzeichnet, dass** während der Drehung des Probenbehälters (100), ein am Probenbehälter (100), aufgebrachter Code, insbesondere ein Barcode von der optischen Erfassungseinrichtung (80) erfasst wird.

10. Verfahren nach Anspruch 8, **dadurch gekennzeichnet, dass** die Position des Codes, insbesondere des Barcodes erfasst wird und der Probenbehälter (100), über 360 Grad hinaus soweit gedreht wird, bis sich der Barcode an einer definierten Position befindet.

11. Verfahren nach einem der vorangehenden Ansprüche, **dadurch gekennzeichnet, dass** die Lage eines Probenbehälters (100), in einer Trägereinheit (30) mit einem optischen System kontrolliert wird.

12. Verfahren nach Anspruch 10, **dadurch gekennzeichnet, dass** die Lage eines Probenbehälters (100), vor der Entdeckelung kontrolliert wird.

13. Verfahren nach einem der vorangehenden Ansprüche 10 bis 11, **dadurch gekennzeichnet, dass** die Lage des Probenbehälters (100), nach der Entdeckelung kontrolliert wird.

14. Verfahren nach einem der vorangehenden Ansprüche, **dadurch gekennzeichnet, dass** die Deckelfarbe mit einer optischen Erfassungseinrichtung (80) ermittelt wird, wobei eine Deckelfarbe eines Deckeltyps mit einer Behandlungsvorschrift verknüpft ist.

15. Vorrichtung zur automatischen Handhabung eines Probenbehälters (100), mit einem Greifkopf (50), der mit einer Steuereinheit verbunden ist, wobei der Greifkopf (50) wenigstens zwei zangenartige Greifbacken (52, 54) aufweist, und der Greifkopf (50) in seiner vertikalen Position durch einen Motor (92) in einer kombinierten Bewegung aus einer translatorischen insbesondere vertikalen und einer rotatorischen Bewegung verfahrbar ist, wobei der Öffnungswinkel der Greifbacken (52, 54) abhängig von der vertikalen Verfahrstrecke des Greifkopfes (50) ist, **dadurch gekennzeichnet, dass** eine optische Erfassungseinrichtung (80) vorgesehen ist die mit der Steuereinheit verbunden ist, wobei durch die optische Erfasssungseinrichtung (80) jeder in die Vorrichtung eingebrachter Probenbehälter (100) erfassbar ist und durch welche bestimmbar ist und die Steuereinheit abhängig vom erkannten Deckeltyp und/oder Probenbehältertyp das aufzubringende Drehmoment und die Greifkraft des Greifkopfes einstellt.

16. Vorrichtung nach dem Oberbegriff des Anspruchs 1, **dadurch gekennzeichnet, dass** ein Hebegreifer (60) vorgesehen ist, der mit der Steuereinheit verbunden ist, wobei der Hebegreifer (60) einen Griffbereich zur Festlegung des Probenbehälter (100), aufweist, und der Hebegreifer (60) derart mit wenigstens einem Motor (72, 78) verbunden ist, dass er einen Probenbehälter (100) anheben, festhalten und absetzen kann.

17. Vorrichtung nach einem der vorangehenden Ansprüche, **dadurch gekennzeichent,** dass ein Hebegreifer (60) vorgesehen ist, der zwei Schenkel (62, 64) umfasst an deren Ende je ein Griffbereich angeordnet ist.

18. Vorrichtung nach Anspruch 17, **dadurch gekennzeichnet, dass** der Griffbereich ist derart gestaltet ist, dass er Probenbehälter (100) mit unterschiedlichen Durchmessern, insbesondere kreisförmigen Querschnitts aufnehmen kann.

19. Vorrichtung nach Anspruch 17, **dadurch gekennzeichnet, dass** der Griffbereich Federn (68, 68a) aufweist, über die der Probenbehälter (100) gehalten wird.

20. Vorrichtung nach einem der Ansprüche 15 bis 19, **dadurch gekennzeichnet, dass** der Greifkopf (50) über einen Schaft mit einem Antriebsmotor (92) verbunden ist, wobei ein Verfahren des Greifkopfs (50) durch eine Drehbewegung des Greifkopfs (50) gegenüber dem Schaft erfolgt.

21. Vorrichtung nach einem der Ansprüche 15 bis 20, **dadurch gekennzeichnet, dass** Federn (53) die Greifbacken (52, 54) verbinden, wodurch die Spannkraft der Greifbacken (52, 54) abhängig vom Öffnungswinkel der Greifbacken (52, 54) ist.
